Europäisches Patentamt

European Patent Office

Office européen des brevets

(11) Numéro de publication: **0 345 177**
A1

# DEMANDE DE BREVET EUROPEEN

(21) Numéro de dépôt: **89420191.2**

(22) Date de dépôt: **01.06.89**

(51) Int. Cl.⁴: **F 16 H 37/04**
F 16 H 57/02, B 60 K 25/00,
B 60 K 17/04

(30) Priorité: **03.06.88 FR 8807660**

(43) Date de publication de la demande:
**06.12.89 Bulletin 89/49**

(84) Etats contractants désignés:
**BE CH DE ES GB IT LI LU NL SE**

(71) Demandeur: **Grillet, Jean-Claude Marcel**
**Rue des Rameaux**
**F-07100 Davezieux (FR)**

**Guegan, Marcel Joseph**
**Porh Person Landaul**
**F-56690 Landevant (FR)**

(72) Inventeur: **Grillet, Jean-Claude Marcel**
**Rue des Rameaux**
**F-07100 Davezieux (FR)**

**Guegan, Marcel Joseph**
**Porh Person Landaul**
**F-56690 Landevant (FR)**

(74) Mandataire: **Ropital-Bonvarlet, Claude**
**Cabinet BEAU DE LOMENIE 99, Grande rue de la**
**Guillotière**
**F-69007 Lyon (FR)**

(54) **Groupe motoréducteur auxiliaire, d'entraînement temporaire, direct et à vitesse constante pour machines diverses.**

(57) - Groupes motoréducteurs auxiliaires.
- Le groupe comprend :
. un carter (9) d'adaptation sur le boîtier,
. un centrage (18) présenté par le carter pour le montage d'un organe moteur (19),
. un couple de pignons dentés (15, 16) montés dans le carter et comprenant un premier pignon tournant traversé par un arbre de transmission (22), libre de coulisser axialement, et un second pignon tournant comportant des moyens d'assemblage avec l'arbre de sortie du moteur (19),
. un dispositif (24) de commande en déplacement alternatif agissant sur l'arbre de transmission,
. et un pignon d'accouplement (35) entraîné par l'arbre.
- Application aux machines de montage de muret en béton.

Fig. 2

EP 0 345 177 A1

**Description**

## GROUPE MOTOREDUCTEUR AUXILIAIRE, D'ENTRAINEMENT TEMPORAIRE, DIRECT ET A VITESSE CONSTANTE POUR MACHINES DIVERSES

La présente invention est relative aux groupes motoréducteurs auxiliaires, d'entraînement temporaire de machines diverses pouvant être, par elles-mêmes, motorisées ou non, mais dont l'utilisation ou la mise en service requiert le recours à un groupe motoréducteur auxiliaire capable d'assurer un entraînement temporaire, généralement direct et à vitesse constante.

De très nombreuses machines répondent à cette caractéristique particulière de devoir être mues en fonctionnement par l'intermédiaire d'un groupe motoréducteur auxiliaire d'entraînement temporaire capable de leur assigner, le plus souvent directement mais parfois aussi indirectement, un entraînement à vitesse constante généralement lente.

Parmi les applications possibles, il convient de citer les machines d'épandage, voire de moulage, destinées à constituer, à partir d'une grande capacité de réserve de matière première préenrobée ou préconditionnée, un dépôt dans des conditions homogènes et constantes au fur et à mesure d'un déplacement à faible vitesse constante.

A titre de précision non limitative, il convient de citer les machines de moulage de murets en béton le long de voies de circulation, les machines de préparation et de coulage de béton, préconditionné ou non dans le cas d'exécution d'excavations, de fouilles, de fossés, etc, ou, encore, certaines machines de dépôt d'enrobés ou analogues sur des voies de circulation.

Dans les applications données ci-dessus à titres non limitatifs, il est fréquent de recourir à des machines conçues pour posséder des caractéristiques routières ordinaires, c'est-à-dire aptes à pouvoir évaluer le long de trajets sinueux et devant, pour cette raison, posséder des trains porteurs à base de différentiels. Ces machines sont, généralement, pourvues de moyens d'entraînement aptes à les mouvoir le long de telles voies, lorsqu'il s'agit de les déplacer rapidement d'un site à un autre de travail.

On comprend que, dans les phases d'utilisation, les organes de motricité à vocation routière ne sont pas à même d'entraîner le déplacement à faible vitesse constante de telles machines en charge, en raison des caractéristiques de fonctionnement propres de ces organes.

C'est la raison pour laquelle, de telles machines, ainsi que d'autres présentant la même exigence mais dans des domaines techniques différents, sont pourvues d'un groupe motoréducteur auxiliaire d'entraînement temporaire.

En règle générale, un tel groupe est adapté sur le châssis de la machine et se trouve relié, mécaniquement de façon plus ou moins hétérogène, à un organe d'entraînement, tel qu'un arbre, faisant partie d'un essieu porteur dans le cas d'un véhicule routier.

De tels dispositifs sont, en général, encombrants, mal intégrés à la structure générale de la machine et exigent le recours à des moyens de transmission, d'embrayage et de commande faisant intervenir, pour la mise en et hors service, l'intervention manuelle de l'un ou de plusieurs opérateurs.

L'objet de l'invention est de remédier aux inconvénients ci-dessus en proposant un nouveau groupe motoréducteur auxiliaire, de conception particulièrement compacte, robuste et fiable, pouvant être directement adapté sur l'organe porteur de transmission de mouvement, de manière à pouvoir être commandé à distance pour être mis en et hors service selon les besoins.

L'objet de l'invention est de proposer un groupe motoréducteur auxiliaire pouvant être adapté sur les boîtiers de différentiels d'arbres de transmission ou d'arbres porteurs d'engins routiers ou, encore, sur le boîtier d'accouplement ou d'entraînement de machines diverses à fonction multiple pourvues ou non d'une source motrice propre, intégrée ou non.

Pour atteindre les objectifs ci-dessus, le groupe motoréducteur auxiliaire d'entraînement temporaire est caractérisé en ce qu'il comprend :
- un carter d'adaptation sur le boîtier,
- au moins un centrage présenté par le carter pour le montage d'un organe moteur possédant un arbre de sortie tournant,
- au moins un couple de pignons dentés, engrénés, montés dans le carter et comprenant un premier pignon tournant traversé en son centre par un arbre de transmission immobilisé angulairement mais libre de coulisser axialement et un second pignon tournant comportant des moyens d'assemblage avec l'arbre de sortie,
- un dispositif de commande en déplacement alternatif agissant sur l'une des parties terminales de l'arbre de transmission,
- et un pignon d'accouplement entraîné par la seconde partie terminale de l'arbre et destiné à coopérer avec le nez d'accouplement.

Diverses autres caractéristiques ressortent de la description faite ci-dessous en référence aux dessins annexés qui montrent, à titre d'exemple non limitatif, une forme de réalisation de l'objet de l'invention.

La **fig. 1** est une vue en plan schématique d'une machine faisant application du groupe motoréducteur auxiliaire conforme à l'invention.

La **fig. 2** est une coupe-élévation correspondant, à plus grande échelle, à la **fig. 1**.

Les **fig. 3** et **4** sont des coupes transversales prises, à plus petite échelle, selon les lignes **III-III** et **IV-IV** de la **fig. 2**.

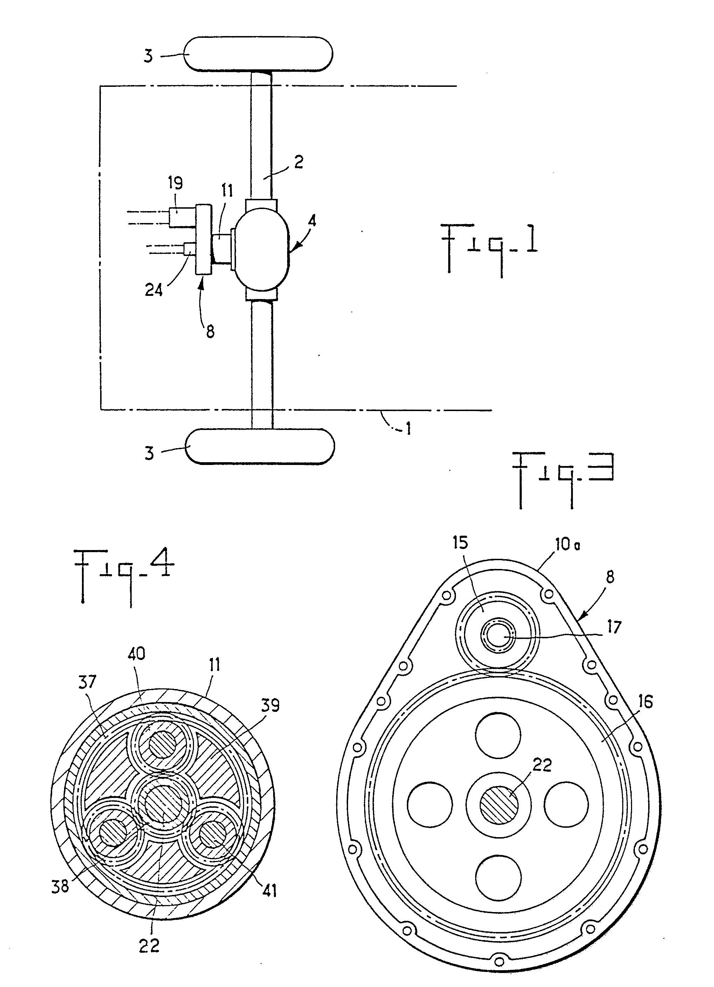

La **fig. 1** montre, de façon schématique, une machine **1**, du type plate-forme porteuse, montée sur des essieux, tels que **2**, pour lui conférer des caractéristiques routières. La plate-forme **1** peut être automotrice ou être constituée sous la forme d'une remorque susceptible d'être entraînée par un tracteur.

A titre d'exemple, la plate-forme **1** est, par exemple, réalisée pour permettre le support d'une bétonnière de grande capacité chargée d'assurer le malaxage des composants du béton, ainsi que le déversement de ce dernier le long de banches de grande longueur dans lesquelles le mélange doit être versé, compacté et vibré de façon continue à faible vitesse.

Une plate-forme **1** du type ci-dessus possède au moins un essieu **2** qui doit pouvoir répondre aux conditions d'évolution routière. Un tel essieu possède, par exemple, deux roues **3** qui sont reliées par des demi-arbres, non représentés, s'étendant de part et d'autre d'un différentiel **4** permettant aux roues **3** d'être animées de rotations angulaires différentes pour faciliter les évolutions le long de trajets courbes.

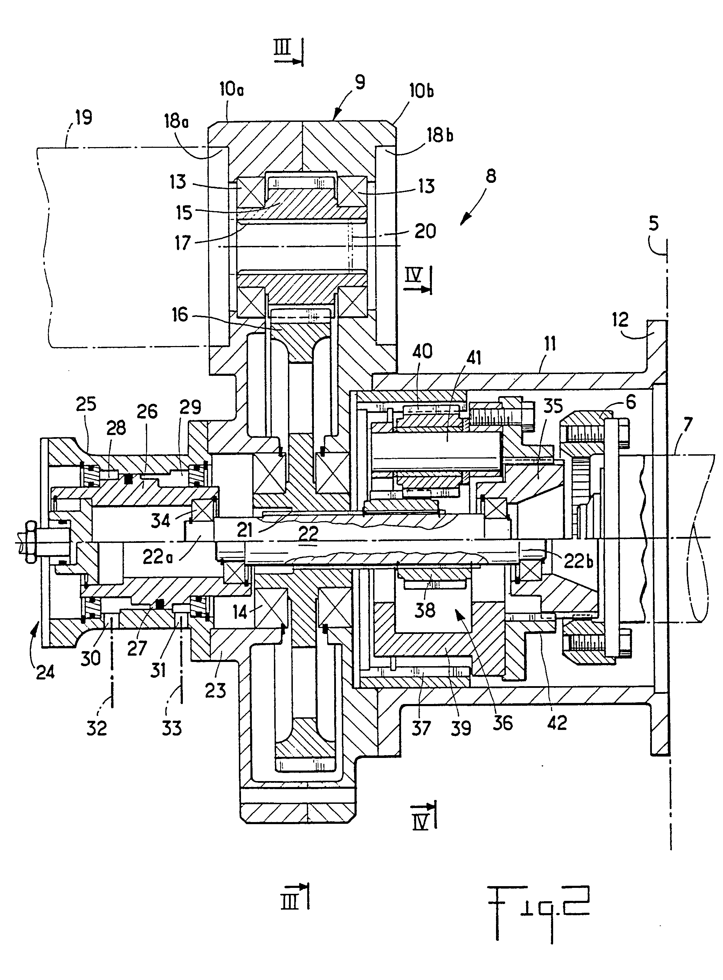

L'objet de l'invention est un groupe motoréducteur auxiliaire, particulièrement conçu pour être adapté sur le boîtier **5** du différentiel qui est équipé, d'une manière connue, d'un nez d'attaque ou d'entraînement **6** généralement réalisé, comme cela apparaît à la **fig. 2**, sous la forme d'une couronne dentée intérieurement ou, plus généralement, extérieurement. Le nez **6** est monté en bout d'un demi-arbre **7** faisant partie du mécanisme différentiel qui n'est pas décrit plus précisément dans ce qui suit, étant donné qu'il fait partie de la connaissance que peut avoir l'homme de l'art de tels mécanismes.

Il doit, bien entendu, être considéré que, dans une autre application, une machine différente à caractère mobile, terrestre ou non, peut aussi, pour sa mise en service ou son fonctionnement, être dépendante de l'intervention d'un groupe motoréducteur auxiliaire qui est, alors, aussi adapté sur le boîtier **5** d'un mécanisme **4** constituant une prise d'accouplement.

Le groupe motoréducteur auxiliaire, désigné dans son ensemble par la référence **8**, comprend, tel que cela ressort des **fig. 2 à 4**, un carter **9** en toute matière appropriée, de préférence constitué par deux demi-flasques **10a** et **10b** susceptibles d'être associés de façon étanche, démontable. L'un des demi-flasques, par exemple **10b**, est de préférence réalisé pour être prolongé par un corps cylindrique tubulaire **11** pourvu d'une bride **12** réservée à l'adaptation et au montage sur le boîtier **5**.

Les flasques **10a** et **10b** délimitent, intérieurement, des paliers **13** et **14**, de préférence à roulements, destinés à assurer le centrage et le support d'un couple de pignons dentés **15** et **16** engrénés en permanence. Dans le cas présent, le couple de pignons constitue un train réducteur et, pour cette raison, le pignon **15** possède un diamètre primitif inférieur à celui du pignon **16** tout en comportant des dents de même module.

Le pignon **15** possède un alésage cannelé **17** traversant, concentrique, dont les extrémités ouvertes affleurent sensiblement, de préférence, deux centrages **18a** et **18b** délimités dans les parois parallèles opposées des flasques **10a** et **10b** pour permettre le montage dans l'un ou l'autre de ces centrages d'un organe moteur **19** schématisé en traits mixtes. Le moteur **19** peut ainsi être placé en support en porte-à-faux sur l'un ou l'autre des flasques **10a** ou **10b** selon les possibilités d'implantation que révèle le montage du groupe motoréducteur sur le boîtier **5**. Le moteur **19** est, de préférence, du type tournant utilisant, en tant que source motrice, l'énergie hydraulique. Un tel moteur possède un arbre de sortie dentée **20** apte à être engagé dans l'alésage cannelé **17**, de manière à être solidaire angulairement du pignon **15** qui représente le pignon menant du train réducteur.

Le pignon **16**, qui constitue le pignon mené du train réducteur, possède également en son centre un alésage axial **21** cannelé et traversant dans lequel est engagé un arbre de transmission **22** libre de coulisser axialement, mais immobilisé angulairement. L'arbre de transmission **22** comporte une première partie terminale **22a** faisant saillie concentriquement au-delà d'un collet **23** présenté par le flasque **10a** pour permettre l'adaptation d'un dispositif **24** de commande en déplacement alternatif. Le dispositif **24** est, de préférence, constitué par un vérin à déplacement rectiligne alternatif, du type double effet, de préférence mais non exclusivement pneumatique. Le vérin **24** comprend un cylindre **25** contenant un piston tubulaire **26** ménageant, par une portée annulaire transversale sensiblement centrale **27**, deux chambres à volume variable **28** et **29** qui sont en relation, par des raccords **30** et **31** avec des canalisations **32** et **33** d'un circuit pneumatique de commande à distance. Le piston tubulaire **26** est adapté sur la partie terminale **22a** par des moyens de liaison axiale autorisant une rotation angulaire libre de l'arbre de transmission **22**. De tels moyens peuvent, par exemple, consister en une butée ou un roulement **34** monté en appui contre des épaulements de butée par l'intermédiaire de joncs élastiques du type circlips.

L'arbre de transmission **22** possède une seconde partie terminale **22b** qui est pourvue d'un pignon d'accouplement **35** apte à pouvoir être engréné avec la couronne d'attaque **6** ou désengréné de cette dernière selon la position axiale de l'arbre de transmission **22**.

Dans la représentation correspondant à la demi-coupe supérieure de la **fig. 2**, le vérin **24** a été commandé en course de rétraction du piston **26** qui a sollicité l'arbre de transmission **22** en course de retrait pour dégager le pignon d'accouplement **35** par rapport à la couronne **6**. Le groupe motoréducteur auxiliaire se trouve ainsi désaccouplé du boîtier **5** et tout entraînement en rotation, dans un sens ou dans l'autre de l'arbre **22** par l'intermédiaire du train de pignon engréné, sollicité par la rotation de l'organe moteur **19**, se traduit par une rotation libre du pignon d'accouplement **35** sans incidence sur l'état ou le fonctionnement intrinsèque du mécanisme auquel se trouve attaché le nez ou la couronne **6**.

Dans la seconde demi-coupe inférieure de la **fig. 2**, le vérin **24** a été commandé pour solliciter le piston **26** en course d'extension. L'arbre **22** est ainsi poussé axialement, de sorte que le pignon d'accouplement **35** se trouve engréné avec la couronne **6**. La rotation du pignon **16** par le pignon **15** sollicité par l'organe moteur **19** est ainsi transmise par l'arbre **22** à la couronne **6** assurant l'entraînement en rotation de l'arbre **7**.

Ainsi que cela ressort de ce qui précède, le groupe motoréducteur auxiliaire se présente sous un encombrement compact et permet de commander à distance, en agissant sur les fluides d'alimentations du moteur **19** et du vérin **24**, l'entraînement temporaire ou le désaccouplement entre le groupe et l'organe de la machine devant être mu en entraînement à vitesse constante stabilisée et contrôlée. Le couple de pignons **15** et **16** peut être réalisé pour assurer une transmission intégrale ou une transmission réduite ou multipliée selon les conditions de mise en service.

En règle générale, un groupe motoréducteur auxiliaire, du type de celui de l'invention, est plus précisément conçu et mis en service pour assurer un entraînement temporaire direct et à faible vitesse constante. Dans le cas où il convient de disposer d'un facteur de réduction relativement important, le groupe, tel que conçu selon l'invention, peut incorporer un deuxième étage de réduction interposé entre l'arbre de transmission **22** et le pignon d'accouplement **35**. Un tel deuxième étage, désigné dans son ensemble par la référence **36**, est, de préférence, constitué par un train épicycloïdal logé à l'intérieur du corps tubulaire cylindrique **11**. Un tel train comprend, tout d'abord, une grande couronne **37** dentée intérieurement, adaptée à la périphérie intérieure du corps cylindrique tubulaire **11** pour être disposée concentriquement à l'arbre de transmission **22**. Le train épicycloïdal comprend, par ailleurs, une petite couronne **38**, dentée extérieurement, qui est formée par ou rapportée sur l'arbre de transmission **22** pour être disposée concentriquement à l'intérieur de la grande couronne **37**. Le train épicycloïdal **35** comporte, par ailleurs, une cage **39** de type annulaire enfilée concentriquement à l'arbre **22**, de manière que des satellites **40** qu'elle porte engrènent simultanément avec les deux couronnes **37** et **38**. Les satellites **40** sont, par exemple, au nombre de trois et montés libres de tourner sur des axes **41** portés par la cage **39** qui est ainsi centrée autour de l'arbre **22** sans contact avec ce dernier, par l'engrènement simultané des satellites avec les couronnes **37** et **38**. La longueur utile d'engrènement entre la couronne **38** et les satellites **40** est déterminée pour laisser subsister, sensiblement, une demi-longueur d'engrènement dans la position de rétraction de l'arbre **22**, telle que représentée dans la demi-coupe supérieure de la **fig. 2**.

La cage **39** est prolongée en direction de la couronne **6** par une bague cannelée **42** dans laquelle est monté libre de coulisser axialement par sa denture, le pignon d'accouplement **35** qui est monté sur la partie terminale **22b** par l'intermédiaire de moyens établissant une liaison axiale tout en autorisant une rotation libre. Par ce moyen, le pignon d'accouplement **35** est monté coaxialement à la denture intérieure de la couronne **6**, laquelle présente un diamètre égal au diamètre primitif définissant les cannelures de la bague **42**. La longueur d'engrènement entre la bague **42** et le pignon **35** est déterminée pour qu'en position d'extension de l'arbre **22** le pignon **35** engrène, simultanément, avec la bague **42** et avec la couronne **6**, comme cela apparaît dans la demi-coupe inférieure de la **fig. 2**.

Le fonctionnement du groupe motoréducteur auxiliaire comportant un deuxième étage de réduction se déduit de celui de l'exemple précédent. En effet, la rotation de l'arbre de transmission assure, par l'intermédiaire de la petite couronne **38**, l'entraînement en rotation des satellites **40** qui, par engrènement avec la grande couronne **37**, provoquent la rotation de la cage **39** chargée d'entraîner, à vitesse réduite, la bague cannelée **42** qui assure l'entraînement du pignon d'accouplement **35** en rotation relative par rapport à la partie terminale **22a** de l'arbre **22**.

Le coulissement de l'arbre de transmission **22** est rendu possible par le glissement de la petite couronne **38** en engrènement permanent avec les dents des satellites **40** et par le déplacement conjugé du pignon d'accouplement **35** à l'intérieur des cannelures de la bague **42**.

Comme dit précédemment, la demi-coupe supérieure de la **fig. 1** montre un état désaccouplé du groupe motoréducteur auxiliaire par rapport à la couronne **6** autorisant, en cas de besoin ou le cas échéant, une rotation libre du pignon d'accouplement **35**.

Par contre, la demi-coupe inférieure de la **fig. 2** illustre un état d'accouplement résultant de la commande du vérin **24** ayant sollicité l'arbre de transmission **22** en course d'extension. Dans un tel état, le pignon d'accouplement **35**, toujours en prise avec la bague cannelée **42** chargée d'assurer son entraînement en rotation relative par rapport à l'arbre de transmission **22**, engrène simultanément avec la couronne **6** qu'il est chargé d'entraîner pour imprimer à l'arbre **7** la transmission en rotation qu'il reçoit.

Les différents moyens techniques mis en oeuvre ci-dessus permettent d'opérer un accouplement-désaccouplement sous rotation relative, en particulier si l'entrée des dentures de la couronne **6** et du pignon d'accouplement **35** le permettent. En effet, les déplacements relatifs de l'arbre de transmission **22** s'opèrent sans contrainte, d'une part, à l'intérieur du pignon **16** et, d'autre part, en relation avec les satellites **40**.

L'invention n'est pas limitée à l'exemple décrit et représenté, car diverses modifications peuvent y être apportées sans sortir de son cadre.

**Revendications**

**1** - Groupe motoréducteur auxiliaire d'entraînement temporaire, direct et à vitesse constante pour machines diverses comportant, dans un boîtier (**5**), un nez d'accouplement (**6**) en forme de couronne dentée, caractérisé en ce qu'il comprend :
- un carter (**9**) d'adaptation sur le boîtier,
- au moins un centrage (**18**) présenté par le carter pour le montage d'un organe moteur (**19**) possédant un arbre de sortie tournant (**20**),
- au moins un couple de pignons dentés (**15, 16**), engrénés, montés dans le carter et comprenant un premier pignon tournant traversé en son centre par un arbre de transmission (**22**), immobilisé angulairement mais libre de coulisser axialement, et un second pignon tournant comportant des moyens d'assemblage avec l'arbre de sortie,

- un dispositif (24) de commande en déplacement alternatif agissant sur l'une des parties terminales de l'arbre de transmission,

- et un pignon d'accouplement (35) entraîné par la seconde partie terminale de l'arbre et destiné à coopérer avec le nez d'accouplement.

2 - Groupe motoréducteur auxiliaire selon la revendication 1, caractérisé en ce que le second pignon (15) possède un alésage concentrique (17), cannelé, traversant, coaxial à deux centrages (18a 18b) présentés par deux parois parallèles (10a, 10b) du carter (9).

3 - Groupe motoréducteur auxiliaire selon la revendication 1, caractérisé en ce que le dispositif de commande (24) est constitué par un vérin, du type à double effet, comprenant un cylindre (25) monté sur le carter et un piston (26) adapté sur la partie terminale (22a) de l'arbre de transmission (22) par un moyen de liaison axiale et de rotation angulaire libre.

4 - Groupe motoréducteur auxiliaire selon la revendication 1, caractérisé en ce que l'organe moteur (19) est constitué par un moteur hydraulique.

5 - Groupe motoréducteur auxiliaire selon la revendication 1, caractérisé en ce que le carter (9) contient un couple de pignons engrénés (15, 16) constituant un étage réducteur.

6 - Groupe motoréducteur auxiliaire selon la revendication 1 ou 5, caractérisé en ce que le carter (9) contient un second étage réducteur (36) interposé entre l'arbre de transmission (22) et le pignon d'accouplement (35).

7 - Groupe motoréducteur auxiliaire selon la revendication 6, caractérisé en ce que le second étage de réduction (36) est constitué par un train épicycloïdal.

8 - Groupe motoréducteur auxiliaire selon la revendication 7, caractérisé en ce que le train épicycloïdal comprend :

- une grande couronne (37), dentée intérieurement, portée par le carter concentriquement à l'arbre de transmission (22),

- une petite couronne (38), dentée extérieurement, portée par l'arbre de transmission (22),

- une cage annulaire (39) disposée entre l'arbre de transmission et la grande couronne,

- et des satellites (40) dentés portés par la cage et engrenant simultanément avec la grande et avec la petite couronne.

9 - Groupe motoréducteur auxiliaire selon la revendication 8, caractérisé en ce que la cage annulaire (39) est prolongée par une bague cannelée (42) dans laquelle est monté le pignon d'accouplement (35) qui est monté sur la partie terminale correspondante (22b) de l'arbre de transmission (22) par un moyen de liaison axiale et de rotation angulaire libre.

10 - Groupe motoréducteur auxiliaire selon la revendication 8, caractérisé en ce que la petite couronne (38) et les satellites (40) possèdent une longueur axiale d'engrènement telle qu'il subsiste une demi-longueur d'engrènement dans l'état de rétraction de l'arbre de transmission (22).

11 - Groupe motoréducteur auxiliaire selon la revendication 8, caractérisé en ce que le pignon d'accouplement (35) possède une longueur d'engrènement telle qu'il se trouve engréné simultanément avec la bague (42) et la couronne (6) dans l'état d'extension de l'arbre de transmission (22).

12 - Machine comportant un boîtier de transmission incluant un nez d'accouplement, caractérisée en ce qu'elle comporte un groupe motoréducteur auxiliaire selon l'une des revendications 1 à 11 et adapté sur le boîtier.

Fig.1

Fig.3

Fig.4

Fig.2

Office européen
des brevets

**RAPPORT DE RECHERCHE EUROPEENNE**

Numero de la demande

EP 89 42 0191

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 504 563  (POLAK)<br>* En entier *<br>--- | 1,12 | F 16 H  37/04<br>F 16 H  57/02<br>B 60 K  25/00<br>B 60 K  17/04 |
| A | DE-A-2 707 699  (THYSSEN)<br>* Page 3, lignes 19-22; page 10, lignes 5-16; figure 2 *<br>--- | 1,12 | |
| A | US-A-4 410 071  (OSTERMAN)<br>* Colonne 4, lignes 60-68; colonne 5, lignes 1-12; figure 2 *<br>--- | 1 | |
| A | FR-A-2 353 768  (BRIMONT MARCEL)<br>* Revendication 1 *<br>--- | 1 | |
| A | DE-A-3 600 007  (SILVAN, ECKHARD)<br>* Colonne 4, lignes 50-67 *<br>----- | 1 | |

DOMAINES TECHNIQUES
RECHERCHES (Int. Cl.4)

F 16 H
B 60 K

Le présent rapport a été établi pour toutes les revendications

| Lieu de la recherche | Date d'achèvement de la recherche | Examinateur |
|---|---|---|
| LA HAYE | 07-09-1989 | BEERNAERT J.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)